# EUROPÄISCHE PATENTANMELDUNG

(11) **EP 0 913 240 A2**
(43) Veröffentlichungstag der Anmeldung: **06.05.1999**
(21) Anmeldenummer: 98118367.6
(22) Anmeldetag: 29.09.1998
(51) Int. Cl.: B29C 44/44, B29C 44/12

(54) **Verfahren zum Herstellen eines Schaumstoffkörpers und schaumstoffkörper**

(30) Priorität: 29.10.1997 DE 19747645
(71) Anmelder: Behr GmbH & Co., 70469 Stuttgart (DE)
(72) Erfinder: Wolf, Walter, 71570 Oppenweiler-Zell (DE)
(74) Vertreter: Wilhelm & Dauster Patentanwälte European Patent Attorneys

(57) **Zusammenfassung**

Bei einem Verfahren zum Herstellen eines Schaumstoffkörpers aus thermoplastischen Schaumstoffpartikeln wird vor dem Einfüllen der Schaumstoffpartikel in ein Formnest wenigstens ein Hohlkörper eingelegt, der während des Befüllens und/oder Bedampfens mit Innendruck beaufschlagt ist. Dadurch wird ein Schaumstoffkörper geschaffen, der einen oder mehrere integrierte Kanäle enthält.

## Beschreibung

Die Erfindung betrifft ein Verfahren zum Herstellen eines Schaumstoffkörpers, bei welchem thermoplastische Schaumstoffpartikel in ein Formnest eingefüllt und dann mittels unter Druck eingeblasenen Dampf miteinander verschweißt werden.

Mittels des bekannten Verfahrens der eingangs genannten Art werden Verkleidungsteile hergestellt, insbesondere für den Innenraum von Kraftfahrzeugen, beispielsweise Polster oder Säulenverkleidungen o.dgl. Dabei ist es bekannt (WO 95/08433), eine Wand des Formnestes mit einem Sieb oder Gitter oder Vlies auszukleiden, um eine lackierfähige Oberfläche zu erhalten. Es ist auch bekannt (EP-B-0 666 796), eine besondere Gestaltung der Wandungen des Formnestes vorzusehen, um Energie einzusparen, indem auf ein Kühlen des Formnestes mittels Besprühen mit Wasser verzichtet wird.

Der Erfindung liegt die Aufgabe zugrunde, ein Verfahren der eingangs genannten Art zu schaffen, durch das es möglich ist, die damit hergestellten Schaumstoffkörper nicht nur als Polster, sondern auch als zusätzliches Funktionselement zu benutzen.

Diese Aufgabe wird dadurch gelöst, daß vor dem Einfüllen der Schaumstoffpartikel in das Formnest wenigstens ein Hohlkörper eingelegt wird, und daß in dem eingelegten Hohlkörper ein Innendruck aufgebaut wird, der im wesentlichen dem außen auf den Hohlkörper wirkenden Druck entspricht.

Mittels des eingelegten Hohlkörpers werden ein oder mehrere Kanäle in dem Hohlkörper geschaffen, so daß dieser beispielsweise als ein Teil oder als eine gesamte Armaturentafel eines Kraftfahrzeuges eingsetzt werden kann und dabei Luftverteilkanäle enthält. Der eingelegte Hohlkörper erlaubt einen räumlichen Verlauf des von ihm in dem Formkörper gebildeten Kanals, der kaum mittels Kernen o.dgl. realisierbar ist. Gleichzeitig wird mittels der Erfindung dem Problem begegnet, daß der Hohlkörper insbesondere bei der Beaufschlagung mit Dampf hohen Drücken ausgesetzt ist, jedoch dadurch nicht deformiert wird. Da in dem Hohlkörper ein Innendruck aufgebaut wird, der dem von außen wirkenden Druck wenigstens annähernd entspricht, können Hohlkörper mit relativ geringen Wandstärken verwendet werden, ohne daß die Gefahr einer Deformation oder eines Zusammendrückens der Hohlkörper besteht.

In vorteilhafter Ausgestaltung der Erfindung wird vorgesehen, daß der Hohlkörper perforiert ist und daß in den Hohlkörper während des Einblasens von Dampf ebenfalls Dampf eingeblasen wird. Damit wird nicht nur ein Druckausgleich erhalten, sondern zusätzlich erreicht, daß die Dampfverteilung auch vom Inneren des Hohlkörpers her erfolgt.

In weiterer Ausgestaltung der Erfindung wird ein Schaumstoffkörper aus miteinander verschweißten Schaumstoffpartikeln geschaffen, der wenigstens einen eingeformten Hohlkörper enthält, der von den verschweißten Schaumstoffpartikeln umgeben ist. Besonders vorteilhaft ist dabei, wenn der Hohlkörper aus dem Werkstoff besteht, aus dem die Schaumstoffpartikel bestehen. Der Schaumstoffkörper mit dem oder den integrierten Kanälen ist deshalb gut recyclebar.

Weitere Merkmale und Vorteile der Erfindung ergeben sich aus der nachfolgenden Beschreibung des anhand der Zeichnungen erläuterten Formvorgangs und des dabei erzeugten Formkörpers.
- Fig. 1: zeigt einen vertikalen Schnitt durch eine Vorrichtung zum Durchführen des erfindungsgemäßen Verfahrens und
- Fig. 2: einen Schnitt entlang der Linie II-II durch einen erfindungsgemäßen Schaumstofformkörper mit einem eingelegten Hohlkörper.

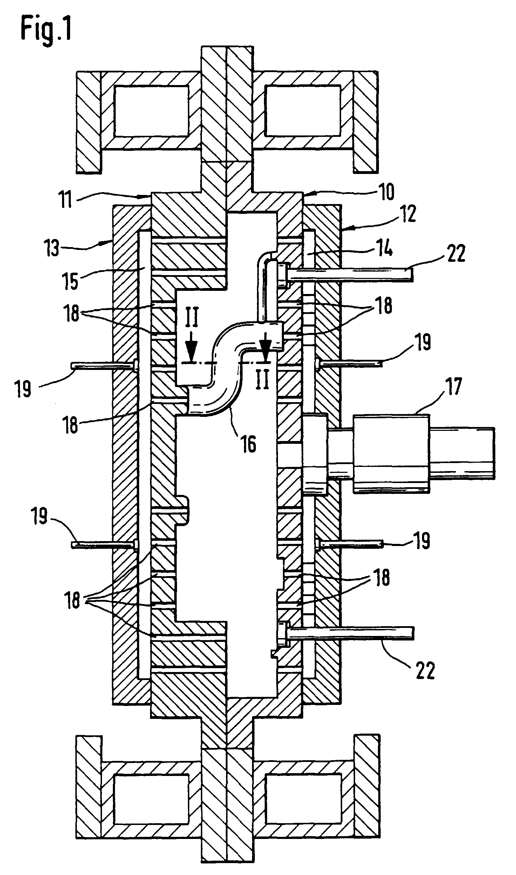

Die in Fig. 1 dargestellte Vorrichtung besitzt zwei Formhälften 10, 11, die mittels nicht dargestellter, vorzugsweise hydraulischer Einrichtungen in die dargestellte Schließstellung gebracht und zur Entnahme eines Werkstückes geöffnet werden können. Die Außenseiten der Formhälften 10, 11 sind dichtend mit Schalen 12, 13 umgeben, die mit den Formhälften 10, 11 jeweils eine sogenannte Bedampfungskammer 14, 15 bilden.

In das von den beiden Formhälten 10, 11 gebildete Formnest ist ein Hohlkörper 16 eingelegt, der bei dem Ausführungsbeispiel aus einem knieförmigen Rohrstück und einem daran anschließenden rohrförmigen Ansatz besteht. Der Hohlkörper 16 ist an den beiden Formhälften 10, 11 durch Ansätze oder Aussparungen lagefixiert. Bei dem Ausführungsbeispiel sind die beiden Formhälften 10, 11 derart gestaltet, daß spiegelbildlich zu dem Kohlkörper 16 ein zweiter Hohlkörper gleicher Form eingelegt werden kann.

Das Formnest wird mit Schaumstoffpartikeln einer vorgegebenen Körnung befüllt. Das Befüllen erfolgt über einen oder mehrere Füller 17, die als Injektoren ausgebildet sind und die mit Druckluft beaufschlagt sind. Die Schaumstoffpartikel werden aus einem nicht dargestellten Vorratsbehälter angesaugt und mittels der Druckluft in das Formnest eingeblasen. Um eine gute Befüllung zu erhalten, wird während dieses Vorgangs das Formnest entlüftet. Hierzu dienen eine Vielzahl von düsenartigen Öffnungen 18 in den beiden Formhälften, die zu der Bedampfungskammer 14, 15 offen sind. An die Bedampfungskammern 14, 15 schließen ventilgesteuerte Zu- und Ableitungen 19 an, über die die Luft während des Befüllens des Formnestes entweichen kann.

Es ist auch bekannt, das Befüllen des Formnestes nach einer sogenannten Kompressionsmethode durchzuführen. Hierzu wird das Volumen der weichen bis halbharten Schaumstoffpartikel kurz vor und während der Füllung mittels Luftdruck verringert. Während des Füllens wird das Formnest ebenfalls unter Druck gehalten. Nach Beendigen des Füllvorgangs und eines Druckabbaus in dem Formnest nehmen die vorher komprimierten Schaumstoffpartikel wieder ihr ursprüngliches Volumen ein und füllen das Formnest vollständig aus. Hierzu können erhebliche Druckhöhen erforderlich sein, die bis zu 6 bar betragen können.

Des weiteren ist eine Druckbeladungsmethode bekannt, gemäß welcher die Schaumstoffpartikel in einem Druckbehälter bereitgehalten und mit Druckluft mit stetig ansteigendem Druck beaufschlagt werden. Damit wird ein Überdruck im Inneren der Schaumzellen der Schaumstoffpartikel erzeugt. In diesem Fall expandieren die unter Druck stehenden Schaumstoffpartikel bei einem nachfolgenden Vorgang, so daß ebenfalls eine erhöhte Dichte erhalten wird. Darüber hinaus ist es selbstverständlich auch möglich, die einzelnen Befüllungsmethoden miteinander zu kombinieren, insbesondere die Kompressionsmethode und die Druckbeladungsmethode.

Nach dem Füllen des Formnestes mit Schaumstoffpartikeln wird Wasserdampf über die Bedampfungskammern 14, 15 und die Öffnungen 18 in das Formnest eingeleitet, wobei der Wasserdampf über die Anschlüsse 19 zugeführt wird. Der Dampf muß zunächst die in den Bedampfungskammern 14, 15 und in dem Formnest vorhandene Luft verdrängen. Hierzu kann zweckmäßigerweise vorgesehen werden, daß zunächst die Luft nur über die Anschlüsse 19 einer der Formhälften 10, 11 Dampf zugeführt wird, während die Luft über die Anschlüsse der anderen Formhälfte entweichen kann. Danach erfolgt das eigentliche Bedampfen und Aufschäumen und Verschweißen der Kunststoffpartikel. Dabei kann die Dampfbeaufschlagung auch mit wechselnder Richtung von einer Seite zur anderen Seite erfolgen.

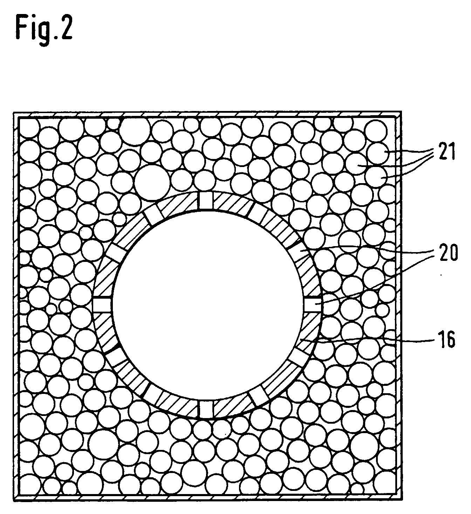

Bei dem Befüllen und insbesondere bei dem Bedampfen treten in dem Formnest relativ hohe Drücke auf. Um zu verhindern, daß der Hohlkörper 16 aufgrund dieser hohen Drücke deformiert und insbesondere zusammengedrückt wird und um nicht für diesen Hohlkörper 16 eine entsprechend hohe Wandstärke vorzusehen, wird der Hohlkörper mit einem Innendruck beaufschlagt, der einen Druckausgleich zu dem auf ihn einwirkenden Außendruck herstellt. Wie aus Fig. 1 zu ersehen ist, führen zu dem Hohlkörper 16 Öffnungen 18, so daß dieser sowohl mit Druckluft als auch mit Dampf entsprechend dem jeweiligen Verfahrensschritt innen beaufschlagt wird. Besonders vorteilhaft ist es, wenn der Hohlkörper 16 perforiert ist, wie das in Fig. 2 dargestellt ist. Dabei sind die Durchmesser der Perforationslöcher 20 kleiner als der Durchmesser der Schaumstoffpartikel 21, so daß diese nicht in das Innere des Hohlkörpers 16 gelangen. Aufgrund dieser Perforation erfolgt ein vollständiger Druckausgleich, so daß der Hohlkörper 16 weitgehend unbelastet bleibt. Darüber hinaus hat die Perforation noch den Vorteil, daß beim Bedampfen Dampf durch den Hohlkörper 16 hindurch in das Formnest einströmt und die im Bereich des Hohlkörpers 16 befindlichen Schaumstoffpartikel 21 gut erreicht.

Nach dem Bedampfen erfolgt in der Regel ein Kühlen, damit sich die Oberflächen glätten und der Kunststofformkörper formstabil bleibt. Dies kann in nicht näher dargestellter Weise durch Aufsprühen von Kühlwasser erfolgen. Es ist jedoch auch unter Umständen möglich, auf einen eigenen Schritt des Kühlens zu verzichten, wenn nach der EP-B-0 666 796 gearbeitet wird.

Zum Entformen werden die Werkzeughälften 10, 11 auseinanderbewegt, während gleichzeitig eine Druckluftbeaufschlagung erfolgt. Zusätzlich sind Auswerfer 22 in einer der Formhälften 10 vorgesehen. Das Druckluftpolster auf der Seite der Formhälfte 11 übergibt beim Öffnen den Schaumstoffkörper an die mit den Auswerfern 22 versehene Formhälfte 10. Danach erfolgt auf dieser Seite ebenfalls eine Beaufschlagung mit Druckluft, während gleichzeitig die Auswerfer 22 betätigt werden.

Üblicherweise werden die Öffnungen 18 mit Schlitz- oder Lochdüsen versehen, die ein Entweichen von Luft aus dem Formnest und eine gleichmäßige Verteilung des Wasserdampfes während des Verschweißens ermöglichen.

Es ist auch bekannt, ein Formnest zwischen zwei Formhälften weitgehend drucklos mit Schaumstoffgranulat zu befüllen und nach dem Befüllen die Fülldichte dadurch zu erhöhen, daß die beiden Formhälften gegeneinander verschoben werden, so daß das Volumen des Formnestes verringert wird. Auch hierbei können relativ hohe Drücke auf einen eingelegten Hohlkörper ausgeübt werden, so daß es zweckmäßig ist, diesen Hohlkörper dann mit Druckluft zu beaufschlagen. In diesem Fall ist es zweckmäßig, für den Hohlkörper 16 Druckluftanschlüsse vorzusehen, die unabhängig von den übrigen Öffnungen 18 mit Druckluft beaufschlagt werden können, so daß während des Verringerns des Volumens des Formnestes über die anderen Öffnungen 18 Luft entweichen kann.

Mittels des erfindungsgemäßen Verfahrens ist es möglich, Schaumstoffkörper herzustellen, die mit integrierten Kanälen versehen sind, die einen räumlich gekrümmten Verlauf aufweisen und nicht, oder zumindest nicht ohne weiteres, mittels Schiebern o.dgl. einer Form hergestellt werden können. Die Kanäle können zum Führen von Gasen, beispielsweise heißer oder kalter Luft einer Klimaanlage oder einer Heizung eines Fahrzeuges, zum Führen von Flüssigkeiten oder zum Verlegen von elektrischen, pneumatischen oder hydraulischen Leitungen dienen. Dabei ist es insbesondere auch möglich, einen oder mehrere Hohlkörper 16 zu verwenden, der dem Werkstoff entsprechen, aus welchem die Schaumstoffpartikel bestehen. Dies hat den Vorteil, daß der Schaumstoffkörper mit dem oder den integrierten Hohlkörpern gut recycelt werden kann.

Als thermoplastische Schaumstoffpartikel eignen sich expandierbares Polysterol (EPS), expandierbare Polysterol-Kopolymerisate (PS/PPO), expandierbare Polyethylen-Kopolymerisate, vorexpandiertes Polyethylen (EPE), vorexpandiertes Polypropylen (EPP) oder auch Polyurethan. Insbesondere vorexpandiertes Polyethylen und vorexpandiertes Polypropylen haben den Vorteil, daß sie treibmittelfrei sind.

Der Hohlkörper 16 besteht bei einer abgewandelten Ausführungsform aus einem gitterförmigen oder netzförmigen Gebilde, beispielsweise aus einem Gewebe. In dieses Gebilde wird ein Stützschlauch eingebracht, der während des Befüllens des Formnestes mit Druckluft o.dgl. aufgeblasen wird. Die Druckluftbeaufschlagung wird während des Einleitens von Wasserdampf wenigstens so lange aufrecht erhalten, bis die außen an dem Gebilde befindlichen Schaumstoffpartikel sich wenigstens soweit miteinander verbunden haben, daß sie nicht mehr in das Innere des Gebildes gelangen können.

## Patentansprüche

1. Verfahren zum Herstellen eines Schaumstoffkörpers, bei welchem thermoplastische Schaumstoffpartikel in ein Formnest eingefüllt und dann mittels unter Druck eingeblasenen Dampf miteinander verschweißt werden, dadurch gekennzeichnet, daß vor dem Einfüllen der Schaumstoffpartikel in das Formnest ein Hohlkörper eingelegt wird, und daß in dem eingelegten Hohlkörper ein Innendruck aufgebaut wird, der im wesentlichen dem außen auf den Hohlkörper wirkenden Druck entspricht.

2. Verfahren nach Anspruch 1, dadurch gekennzeichnet, daß der Hohlkörper perforiert ist und daß in den Hohlkörper während des Einblasens von Dampf ebenfalls Dampf eingeblasen wird.

3. Verfahren nach Anspruch 1 oder 2, dadurch gekennzeichnet, daß die Schaumstoffpartikel mittels Druckbefüllung in das Formnest eingebracht werden, und daß während des Druckbefüllens in den Hohlkörper Druckluft eingebracht wird, deren Druckhöhe wenigstens annähernd der Druckhöhe des Befüllungsdruckes entspricht.

4. Verfahren nach Anspruch 1 oder 2, dadurch gekennzeichnet, daß die Schaumstoffpartikel im wesentlichen drucklos in das Formnest eingebracht werden, wonach das Volumen des Formnestes reduziert wird, und daß während des Reduzierens des Volumens des Formnestes in den Hohlkörper Druckluft eingebracht wird, deren Druckhöhe wenigstens annähernd dem beim Reduzieren des Volumens von außen auf den Hohlkörper einwirkenden Druck entspricht.

5. Schaumstoffkörper aus miteinander verschweißten Schaumstoffpartikeln, dadurch gekennzeichnet, daß der Schaumstoffkörper wenigstens einen eingeformten Hohlkörper (16) enthält, der von den verschweißten Schaumstoffpartikeln (21) umgeben ist.

6. Schaumstoffkörper nach Anspruch 5, dadurch gekennzeichnet, daß der Hohlkörper (16) perforiert ist.

7. Schaumstoffkörper nach Anspruch 5 oder 6, dadurch gekennzeichnet, daß der Hohlkörper (16) aus dem Werkstoff besteht, aus dem die Schaumstoffpartikel (21) bestehen.
